# EUROPEAN PATENT SPECIFICATION

(11) **EP 1 201 906 B1**
(45) Date of publication and mention of the grant of the patent: **25.04.2007**
(21) Application number: 01122783.2
(22) Date of filing: 21.09.2001
(51) Int. Cl.: F02G 5/02

(54) **Exhaust heat energy recovery system for internal combustion engine**
Auslasswärmerückgewinnungssystem für eine Brennkraftmaschine
Système de récupération d'énergie d'échappement d'un moteur à combustion interne

(30) Priority: 16.10.2000 JP 2000314648
(43) Date of publication of application: 02.05.2002
(73) Proprietor: HONDA GIKEN KOGYO KABUSHIKI KAISHA, Minato-ku, Tokyo (JP)
(72) Inventor: Ban, Masaki, 4-1, Chuo 1-chome, Wako-shi, Saitama-ken (JP); Matsuzaki Akio, 4-1, Chuo 1-chome, Wako-shi, Saitama (JP)
(74) Representative: Liska, Horst

(56) References cited:
- EP-A- 1 036 921
- DE-A- 19 854 433
- US-A- 996 345
- US-A- 2 549 464
- US-A- 4 599 551
- PATENT ABSTRACTS OF JAPAN vol. 017, no. 181 (M-1394), 8 April 1993 (1993-04-08) & JP 04 335960 A (ZEXEL CORP), 24 November 1992 (1992-11-24)
- PATENT ABSTRACTS OF JAPAN vol. 1995, no. 02, 31 March 1995 (1995-03-31) & JP 06 323659 A (KOBE STEEL LTD), 25 November 1994 (1994-11-25)

## Description

The present invention relates to an exhaust heat energy recovery system for effective utilization of exhaust heat energy of an internal combustion engine as driving energy for other equipments.

As such an exhaust heat energy recovery system for internal combustion engine, there has been known one in which a heat exchanger is disposed in an exhaust pipe and a high temperature fluid taken out of the heat exchanger is used to operate a high temperature portion of other equipment, for example, an absorption type refrigerator (See, for example, Japanese Pre-examination Patent Publication (KOKAI) No. 4-335960 (1992)).

However, when a heat exchanger is disposed in the exhaust pipe as mentioned above, the heat exchanger constitutes an exhaust resistance, thereby producing a bad effect on the output performance of the engine, and rather increasing the fuel consumption of the engine.

On the other hand, in two-wheel and four-wheel vehicles of recent years, a catalytic converter for clarification of exhaust gas is provided in the exhaust system of an engine, so that the vicinity of the catalytic converter is heated to an extremely high temperature by the heat of clarification reaction, and, therefore, various protection means for avoiding heat damages are adopted. If the high heat can be utilized effectively, it will be possible to lower the ambient temperature of the catalytic converter and to contrive simplification of the heat damage protection means.

The present invention has been made in view of those situations, and it is an object of the present invention to provide an exhaust heat energy recovery system for internal combustion engine by which it is possible to utilize the high heat energy present in the vicinity of an exhaust gas clarification catalytic converter intermediately disposed in an exhaust system of an engine as driving energy for other equipment without causing an increase in exhaust resistance.

In order to attain the above object, the present invention is characterized firstly in that a stack of a sound wave generating portion provided at one end portion of a resonance pipe is disposed adjacently to an exhaust gas clarification catalytic converter intermediately disposed in an exhaust system of an internal combustion engine, a transducer for converting into electrical energy the sound wave generated by the stack due to reception of heat from the catalytic converter is provided at the other end portion of the resonance pipe, and an output from the transducer is supplied to an electrical load.

According to the first characteristic feature, the heat of reaction at much higher temperature than the exhaust gas itself generated upon clarification of the exhaust gas by the catalytic converter is used to generate a thermo-acoustic tube phenomenon, and, by utilizing the phenomenon, it is possible to recover the exhaust heat energy as electrical energy and to effectively utilize it for driving an electrical load. In addition, even a portion of the resonance pipe does not need to be projected into the exhaust system, so that exhaust resistance is not increased, the output performance of the internal combustion engine is not lowered, and combustion consumption is not increased. Moreover, since the sound wave generating portion deprives the catalytic converter of the heat generated, overheating of the catalytic converter can be effectively prevented, so that the thermal damage protection means for the internal combustion engine, vehicle body and the like adjacent to the catalytic converter can be simplified.

In addition to the first characteristic feature, the present invention is characterized secondly in that a control valve for controlling the quantity of exhaust gas introduced into the catalytic converter is provided in the exhaust system, and the control valve is controlled according to output conditions of the transducer.

According to the second characteristic feature, a control means controls the flow rate control valve according to the output conditions of the transducer, thereby automatically controlling the quantity of exhaust gas introduced into the catalytic converter, so that it is possible to contrive stabilization of the transducer output and to prevent overheating of the sound wave generating portion.

Further, the present invention is characterized thirdly in that a stack in a heat-driven type sound wave generating portion provided at one end portion of a resonance pipe is disposed adjacently to an exhaust gas clarification catalytic converter intermediately disposed in an exhaust system of an internal combustion engine, and a refrigerator cooled by the sound wave generated by the stack due to reception of heat from the catalytic converter is provided at the other end portion of the resonance pipe.

According to the third characteristic feature, the heat of reaction at much higher temperature than the exhaust gas itself generated upon clarification of the exhaust gas by the catalytic converter is used to generate a thermo-acoustic tube phenomenon, and, by utilizing the phenomenon, the exhaust heat energy can be recovered as driving energy for a refrigerating portion. In addition, even a portion of the resonance pipe deos not need to be projected into the exhaust system, so that exhaust resistance is not increased, the output performance of the internal combustion engine is not lowered, and combustion consumption is not increased. Moreover, since the sound wave generating portion deprives the catalytic converter of the heat generated, overheating of the catalytic converter can be effectively prevented, so that a thermal damage protection means for the internal combustion engine, vehicle body and the like adjacent to the catalytic converter can be simplified.

Further, in addition to any of the first to third characteristic features, the present invention is characterized fourthly in that the catalytic converter is so disposed as to surround a high temperature portion of the sound wave generating portion.

According to the fourth characteristic feature, the heat generated at the catalytic converter can be efficiently transmitted to the high temperature portion of the sound wave generating portion, whereby an effective operation of the sound wave generating portion can be secured.

Further, in addition to any of the first to third characteristic features, the present invention is characterized fifthly in that the catalytic converter is so disposed that an exhaust outlet thereof is proximate to and opposed to the high temperature portion of the sound wave generating portion.

According to the fifth characteristic feature, not only the heat generated at the catalytic converter but also the heat of the high-temperature exhaust gas coming out of the catalytic converter can be transmitted to the high temperature portion of the sound wave generating portion, whereby a more effective operation of the sound wave generating portion can be secured.

A mode for carrying out the present invention will be described based on one embodiment of the invention shown in the accompanying drawings.
Fig. 1 is a vertical sectional side view of an exhaust heat energy recovery system for internal combustion engine according to the First Embodiment of the present invention;
Fig. 2 is a vertical sectional side view of the system according to the Second Embodiment of the invention;
Fig. 3 is a vertical sectional side view of the system according to the Third Embodiment of the invention;
Fig. 4 is a vertical sectional side view of the system according to the Fourth Embodiment of the invention;
Fig. 5 is a vertical sectional side view of the system according to the Fifth Embodiment of the invention;
Fig. 6 is a vertical sectional side view of the system according to the Sixth Embodiment of the invention; and
Fig. 7 is a vertical sectional side view of the system according to the Seventh Embodiment of the invention.

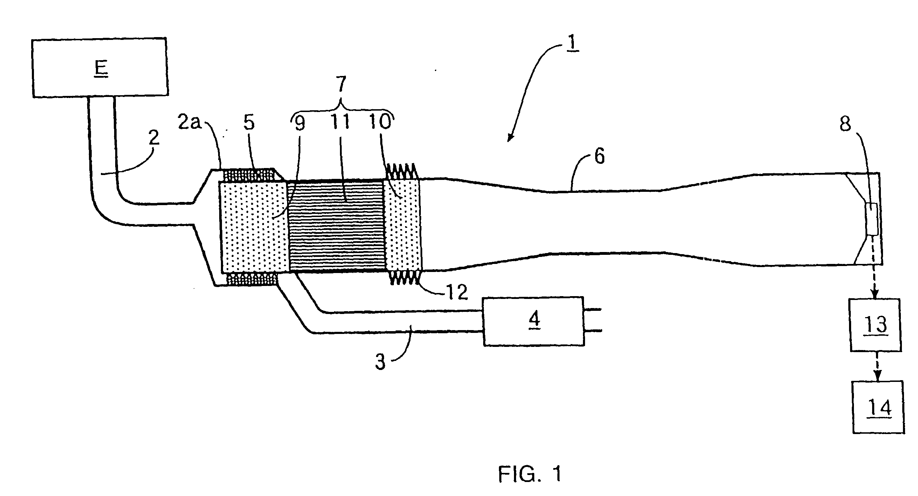

First, description will be started with a description of the First Embodiment of the present invention shown in Fig. 1.

An exhaust system 1 of an internal combustion engine E comprises a front portion exhaust pipe 2 connected to an exhaust port of the internal combustion engine E, a rear portion exhaust pipe 3 connected to a peripheral wall of an enlarged diameter portion 2a provided at the downstream end of the front portion exhaust pipe 2, and a muffler 4 connected to the downstream side of the rear portion exhaust pipe 3.

A ring-form exhaust gas clarification catalytic converter 5 is fitted on the inside peripheral surface of the enlarged diameter portion 2a, a front end portion of a resonance pipe 6 closed at both ends thereof is fitted into the inside periphery of the catalytic converter 5, and a rear end portion of the resonance pipe 6 is extended to a position sufficiently away from the catalytic converter 5. A heat-driven type sound wave generating portion 7 is provided in the front end portion of the resonance pipe 6, and a transducer 8 for converting the sound wave generated at the sound generating portion 7 into electrical energy is provided in the rear end portion of the resonance pipe 6. Air or a rare gas such as helium is sealed in the resonance pipe 6 as a working gas.

The sound wave generating portion 7 comprises a high temperature heat exchanger 9 and a low temperature heat exchanger 10 disposed opposite to each other in the axial direction in the front end portion of the resonance pipe 6, and a high temperature stack 11 disposed between the heat exchangers 9 and 10. The high temperature heat exchanger 9 is disposed at a location surrounded by the catalytic converter 5, and radiating fins 12 are projected on the outside peripheral surface of the resonance pipe 6 corresponding to the position of the low temperature heat exchanger 10. The stack 11 is constituted, for example, of a heat storage body in which a multiplicity of stainless steel sheets are stacked with small gaps therebetween.

On the other hand, the transducer 8 provided in the rear end portion of the resonance pipe 6 is a system which converts the sound wave it receives into mechanical vibration and then into electrical energy; specifically, a combination unit of a vibrating piston and a linear electric generator or a combination unit of a vibrating plate and a piezo conversion element can be used as the transducer. An output of the transducer 8 is supplied through a control means 13 to an electrical load 14 such as a battery, electrical equipment and the like. As the control means 13, known ones such as a voltage regulator, an energy management and the like can be used.

Next, the action or operation of First Embodiment will be described.

During operation of the internal combustion engine E, the exhaust gas discharged from the engine E into the front portion exhaust pipe 2 passes sequentially through the catalytic converter 5, the rear portion exhaust pipe 3 and the muffler 4, to be discharged into the atmosphere. During this process, the catalytic converter 5 chemically removes harmful components such as HC, CO, NOx and the like contained in the exhaust gas passing therethrough, and the heat of reaction generated at the time of the chemical removal heats the catalytic converter 5 to a high temperature higher than the temperature of the exhaust gas. The heat of the catalytic converter 5 is transmitted to the stack 11 through the high temperature heat exchanger 9 surrounded by the catalytic converter 5, so that an end portion of the stack is heated to a high temperature. On the other hand, at the low temperature heat exchanger 10, cooling is conducted through radiation of heat to the atmosphere by the radiating fins 12 on the outside, so that cooling of the other end portion of the stack 11 is promoted. As a result, the stack 11 is given a large temperature gradient between both ends thereof, and self-excited vibration induced by the temperature gradient generates a sound wave, which reciprocates in the resonance pipe 6 through the working gas (such a thermo-acoustic phenomenon is known as described, for example, in the paper "B1-17 Performance of Heat-driven Type Resonance Pipe Refrigerator" published by the Association for Low Temperature Engineering and Superconduction, spring, 1993). The frequency of the sound wave coincides with the resonance frequency of the resonance pipe 6, so that a standing wave is generated in the resonance pipe 6, whereby a vibrating portion of the transducer 8 located at the rear end of the resonance pipe 6 is vibrated, the vibration is converted into electrical energy as mentioned above, and the electrical energy is outputted to the electrical load 14 through the control means 13.

Incidentally, hitherto, the temperature of the exhaust gas itself of an internal combustion engine has been said to be too low to generate a thermo-acoustic phenomenon. On the other hand, the present invention has been made by paying attention to the fact that the heat of reaction generated at the time of clarification of the exhaust gas by the catalytic converter 5 is at a much higher temperature as compared to the exhaust gas temperature; the heat of reaction at the high temperature is used to generate a thermo-acoustic tube phenomenon, and, by utilizing the phenomenon, the exhaust heat energy can be recovered as electrical energy.

In addition, even a portion of the resonance pipe 6 does not need to be projected into the exhaust system 1, so that an increase in exhaust resistance is not caused, the output performance of the internal combustion engine E is not lowered, and, therefore, combustion consumption is not increased. Further, since the sound wave generating portion 7 deprives the catalytic converter 5 of the heat generated, overheating of the catalytic converter 5 can be effectively prevented, so that a thermal damage protection means for the internal combustion engine E, vehicle body and the like disposed adjacent to the catalytic converter 5 can be simplified.

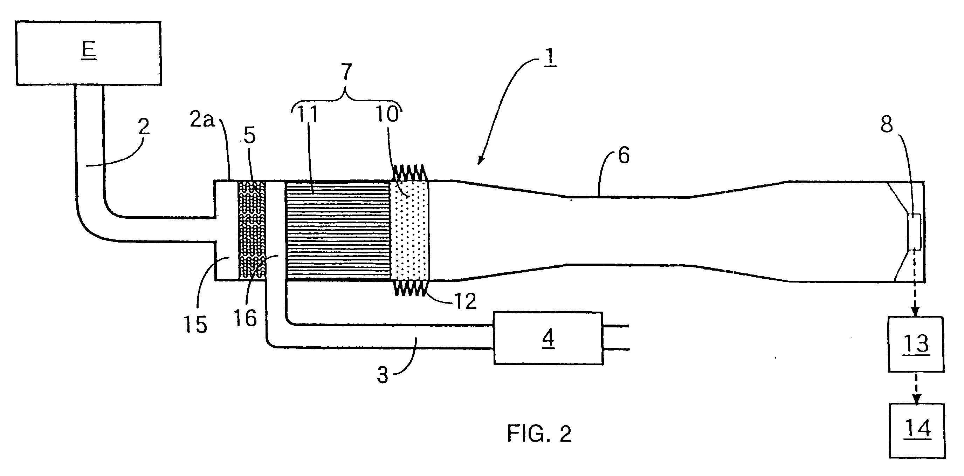

Next, the Second Embodiment of the present invention shown in Fig. 2 will be described.

In the Second Embodiment, a cylindrical columnar catalytic converter 5 is fitted in an enlarged diameter portion 2a of a front portion exhaust pipe 2, an inlet chamber 15 and an outlet chamber 16 are provided on the front and rear sides of the catalytic converter 5, and a rear portion exhaust pipe 3 is connected to the outlet chamber 16. A front end wall of a resonance pipe 6 is disposed opposite to the outlet of the catalytic converter 5 with the outlet chamber 16 therebetween. A high temperature stack 11 of a sound wave generating portion 7 is disposed in close contact with the front end wall of the resonance pipe 6, and a high temperature heat exchanger 9 as in the previous embodiment is abolished.

Other aspects of constitution are the same as in the previous embodiment, so that in Fig. 2 the portions corresponding to those in the previous embodiment are denoted by the same reference symbols, and explanation thereof is omitted.

According to the Second Embodiment, the stack 11 of the sound wave generating portion 7 can be heated directly by the heat of the high temperature exhaust gas itself immediately after passage through the catalytic converter 5 and by the heat radiated from the catalytic converter 5, whereby the efficiency of heat transfer to the stack 11 is enhanced, and simplification of constitution can be achieved by abolition of the high temperature heat exchanger.

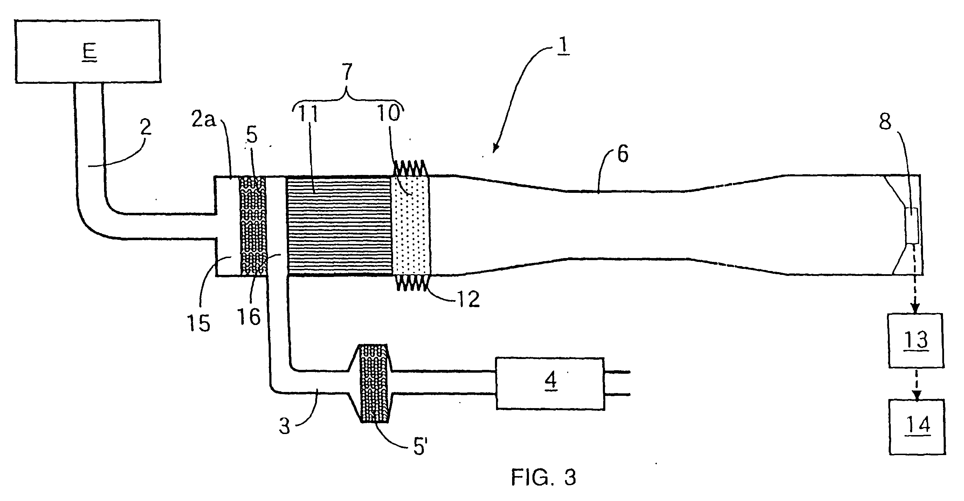

Next, the Third Embodiment of the present invention shown in Fig. 3 will be described.

In the Third Embodiment, a second catalytic converter 5' is intermediately disposed in a rear portion exhaust pipe 3, and other aspects of constitution are the same as in the Second Embodiment, so that in Fig. 3 the portions corresponding to those in the Second Embodiment are denoted by the same reference symbols, and explanation thereof will be omitted.

According to the Third Embodiment, a catalytic converter 5 and the second catalytic converter 5' are disposed in series, whereby the exhaust gas can be clarified in two stages, which is effective for an internal combustion engine with a large exhaust quantity.

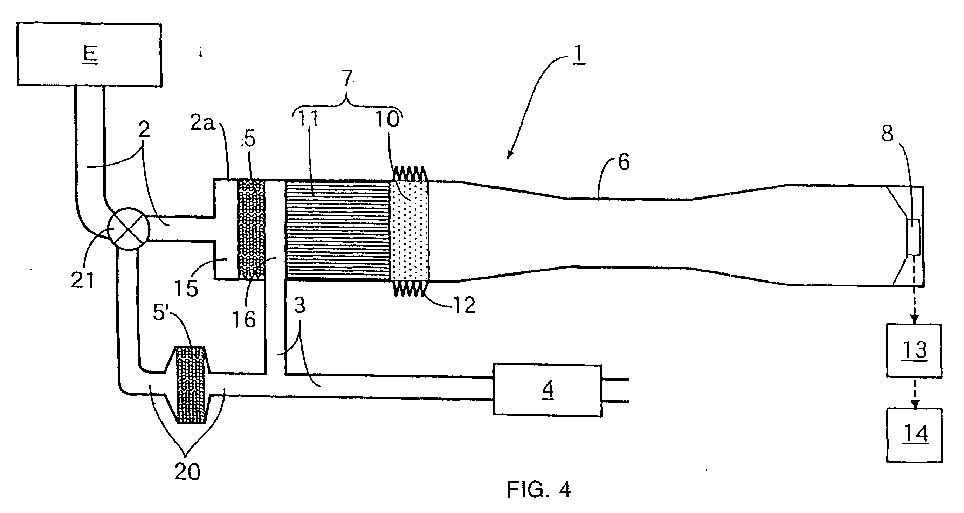

Next, the Fourth Embodiment of the present invention shown in Fig. 4 will be described.

In the Fourth Embodiment, a bypass exhaust pipe 20 connecting front portion and rear portion exhaust pipes 2 and 3 to each other is so provided as to bypass a catalytic converter 5, a second catalytic converter 5' is intermediately provided in the bypass exhaust pipe 20, and a changeover valve 21 is provided at a joint portion of the front portion exhaust pipe 2 and the bypass exhaust pipe 20.

Other aspects of constitution are the same as in the Second Embodiment, so that in Fig. 4 the portions corresponding to those in the Second Embodiment are denoted by the same reference symbols, and explanation thereof will be omitted.

According to the Fourth Embodiment, the changeover valve 21 is changed over according to operating conditions of an internal combustion engine E, whereby the exhaust gas is made to flow through either one of the catalytic converters 5, 5' so as to advance activation thereof at the time of warm-up operation, or the exhaust gas is made to flow through both of the catalytic converters 5, 5' with a flow rate difference therebetween at the time of high-output operation; by these controls, balancing of clarification efficiencies of the catalytic converters 5, 5', loads thereon, the degree of heating of a sound wave generating portion 7 and the like is contrived. By this, appropriate clarification function and durability of the catalytic converters 5, 5' and appropriate operation of the sound wave generating portion 7 can be secured.

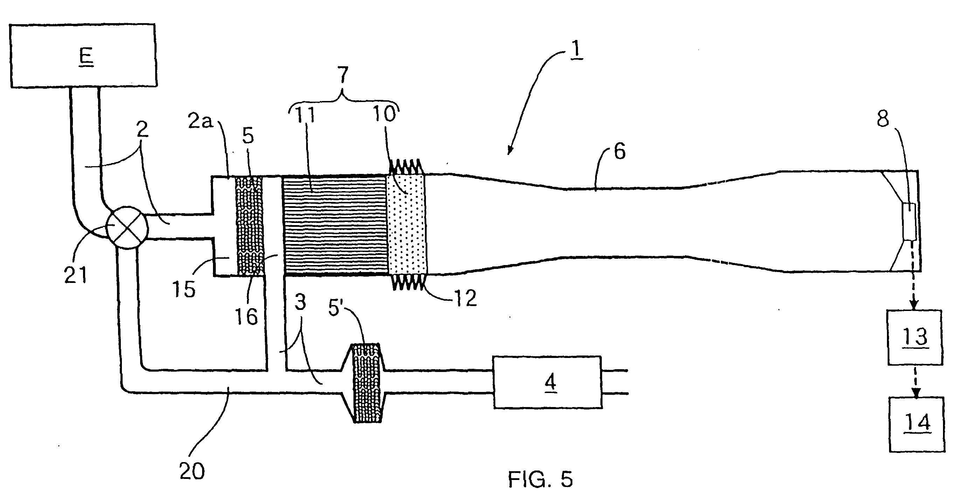

Next, the Fifth Embodiment of the present invention shown in Fig. 5 will be described.

In the Fifth Embodiment, a second catalytic converter 5' is intermediately disposed in a rear portion exhaust pipe 3 on the downstream side of a bypass exhaust pipe 20, and other aspects of constitution are the same as in the Fourth Embodiment, so that in Fig. 5 the portions corresponding to those in the Fourth Embodiment are denoted by the same reference symbols, and explanation thereof will be omitted.

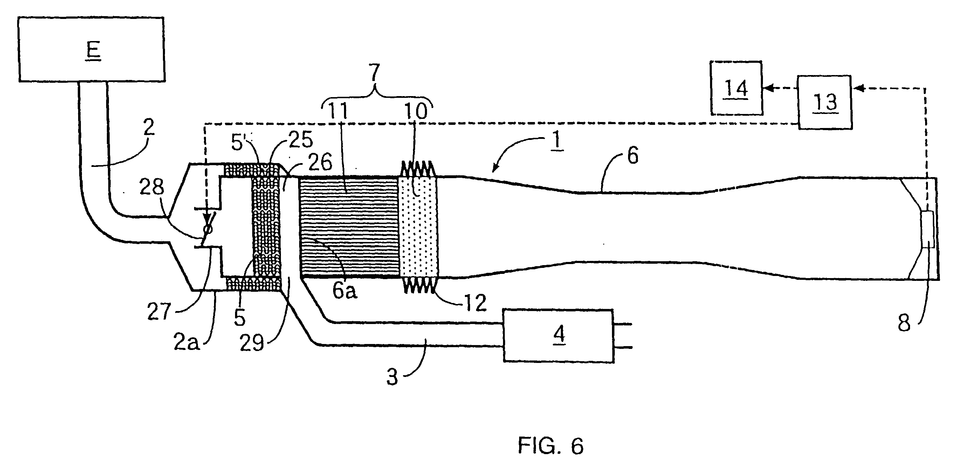

Next, the Sixth Embodiment of the present invention shown in Fig. 6 will be described.

In the Sixth Embodiment, an extension cylinder 25 forming a heating chamber 26 is adjacently connected to the front end of a resonance pipe 6, and the heating chamber 26 is disposed adjacent to a high temperature stack 11 of a sound wave generating portion 7 with a partition wall 6a therebetween. The extension cylinder 25 with a cylindrical columnar catalytic converter 5 fitted therein is disposed in an enlarged diameter portion 2a of a front portion exhaust pipe 2, an exhaust inlet pipe 27 for introducing a portion of the exhaust gas coming from the front portion exhaust pipe 2 into the heating chamber 26 is provided at a front end wall of the extension cylinder 25, and a flow rate control valve 28 for regulating the quantity of the exhaust gas introduced is fitted to the exhaust inlet pipe 27. The flow rate control valve 28 is controlled to open and close by a control means 13 connected to a transducer 8.

A ring form second catalytic converter 5' surrounding the extension cylinder 25 is fitted onto the inside periphery of the enlarged diameter portion 2a.

The extension cylinder 25 is provided with an outlet hole 29 for the exhaust gas having passed through the catalytic converter 5, and a rear portion exhaust pipe 3 is connected to the outlet hole 29 and the rear end of the enlarged diameter portion 2a.

Other aspects of constitution are the same as in the First Embodiment (Fig. 1), so that in Fig. 6 the portions corresponding to those in the First Embodiment are denoted by the same reference symbols, and explanation thereof will be omitted.

According to the Sixth Embodiment, the stack 11 of the sound wave generating portion 7 is heated directly by the heat of the high temperature exhaust gas itself immediately upon passing through the catalytic converter 5 in the heating chamber 26 and by the heat radiated from the catalytic converter 5. In addition, the flow rate control valve 28 for controlling the quantity of exhaust gas introduced into the heating chamber 26 is controlled by the control means 13 according to the output conditions of the transducer 8, so that it is possible to contrive stabilization of the output of the transducer 8 and to avoid overheating of the sound wave generating portion 7.

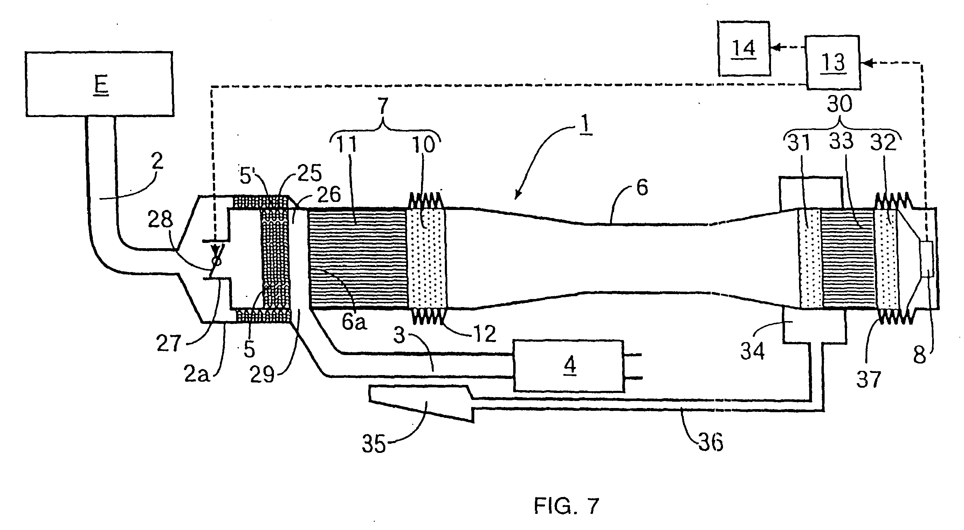

Finally, the Seventh Embodiment of the present invention shown in Fig. 7 will be described.

In the Seventh Embodiment, a refrigerating portion 30 together with a transducer 8 is provided at a rear end portion of a resonance pipe 6. The refrigerating portion 30 comprises a low temperature heat exchanger 31 and a high temperature heat exchanger 32 disposed opposite to each other in the axial direction in the rear end portion of the resonance pipe 6, and a low temperature stack 33 disposed between the heat exchangers 31 and 32. The low temperature heat exchanger 31 is disposed on the side of a sound wave generating portion 7, while the high temperature heat exchanger 32 is disposed on the side of a rear end wall of the resonance pipe 6. The low temperature stack 33 is constituted, for example, of a heat storage body in which a multiplicity of stainless steel sheets are stacked with small gaps therebetween, in the same manner as a high temperature stack 11 of the sound wave generating portion 7.

Corresponding to the position of the low temperature heat exchanger 31, an insensible heat pick-up chamber 34 is provided around the outer periphery of the resonance pipe 6, the chamber 34 and a cooling panel 35 disposed at an appropriate location to be cooled of a vehicle body, for example, a location of the vicinity of an exhaust system 1 which might receive thermal damage are communicated with each other through a coolant conduit 36, and a coolant is circulated between the chamber 34 and the cooling panel 35.

Radiating fins 37 are projected on the outer peripheral surface of the resonance pipe 6 corresponding to the position of the high temperature heat exchanger 32.

Other aspects of constitution are the same as in the Sixth Embodiment, so that in Fig. 7 the portions corresponding to those in the Sixth Embodiment are denoted by the same reference symbols, and explanation thereof will be omitted.

When, in the sound wave generating portion 7, the high temperature stack 11 is given a large temperature gradient by superheating of its one end from the side of the heating chamber 26 and cooling of its other end by the low temperature heat exchanger 10, a standing wave is generated in the resonance pipe 6 due to the temperature gradient, in the same manner as in the case of the First Embodiment. In the working gas in the resonance pipe 6, there are a compression portion and an expansion portion corresponding to condensation and rarefaction portions of the standing wave, and a temperature rise occurs due to adiabatic compression at the compression portion, while a temperature fall occurs due to adiabatic expansion at the expansion portion. The high temperature stack 11 of the sound wave generating portion 7 is located at the temperature rise portion, while a low temperature stack 33 of the refrigerating portion 30 is located at the temperature fall portion, and the sound wave transports heat from the low temperature stack 33 to the high temperature stack 11. As a result, at the refrigerating portion 30, the low temperature stack 33 absorbs heat from the low temperature heat exchanger 31, so that insensible heat of the low temperature heat exchanger 31 is taken out into the insensible heat pick-up chamber 34, and is transferred through the conduit 36 to the cooling panel 35, thereby cooling the cooling panel 35. In the case shown, the cooling panel 35 cools a desired portion of the exhaust system 1, so that thermal damage onto the vicinity thereof can be prevented.

The invention recovers the high heat energy generated by an exhaust gas clarification catalytic converter intermediately disposed in an exhaust system of an internal combustion engine, as electrical energy without causing an increase in exhaust resistance.

To achieve this, a stack 11 in a heat-driven type sound wave generating portion 7 provided at one end portion of a resonance pipe 6 is disposed adjacently to an exhaust gas clarification catalytic converter 5 intermediately disposed in an exhaust system 1 of an internal combustion engine E, one end portion of the stack 11 is heated by the heat generated by the catalytic converter 5, thereby providing the stack 11 with a temperature gradient, and a transducer 8 for converting the sound wave generated by the sound wave generating portion 7 attendant on the temperature gradient into electrical energy is provided at the other end portion of the resonance pipe 6.

## Claims

1. An exhaust heat energy recovery system for internal combustion engine wherein a stack (11) of a sound wave generating portion (7) provided at one end portion of a resonance pipe (6) is disposed adjacently to an exhaust gas clarification catalytic converter (5) intermediately disposed in an exhaust system (1) of an internal combustion engine (E), a transducer (8) for converting into electrical energy the sound wave generated by said stack (11) due to reception of heat from said catalytic converter (5) is provided at the other end portion of said resonance pipe (6), and an output from said transducer (8) is supplied to an electric control means (14).

2. An exhaust heat energy recovery system for internal combustion engine as set forth in claim 1, wherein
a control valve (28) for controlling the quantity of exhaust gas introduced into said catalytic converter (5) is provided in said exhaust system (1), and said control valve (28) is controlled according to output conditions of said transducer (8).

3. An exhaust heat energy recovery system for internal combustion engine wherein a stack (11) of a sound wave generating portion (7) provided at one end portion of a resonance pipe (6) is disposed adjacently to an exhaust gas clarification catalytic converter (5) intermediately disposed in an exhaust system (1) of an internal combustion engine (E), and a refrigeration portion (30) cooled by the sound wave generated by said stack (11) due to reception of heat from said catalytic converter (5) is provided at the other end portion of said resonance pipe (6).

4. An exhaust heat energy recovery system for internal combustion engine as set forth in any of claims 1 to 3, wherein
said catalytic converter (5) is so disposed as to surround a high temperature portion of said sound wave generating portion (7).

5. An exhaust heat energy recovery system for internal combustion engine as set forth in any of claims 1 to 3, wherein
said catalytic converter (5) is so disposed that an exhaust outlet thereof is proximate to and opposed to a high temperature portion of said sound wave generating portion (7).

## Patentansprüche

1. Auslasswärmeenergie-Wiedergewinnungssystem für einen Verbrennungsmotor, worin ein Stapel (11) eines Schallwellenerzeugungsabschnitts (7), der am einen Endabschnitt eines Resonanzrohrs (6) vorgesehen ist, benachbart einem Abgasreinigungskatalysator (5) angeordnet ist, der zwischenliegend in einem Auspuffsystem (1) eines Verbrennungsmotors (E) angeordnet ist, wobei ein Wandler (8) zum Umwandeln der durch den Stapel (11) aufgrund des Erhalts von Wärme von dem katalytischen Wandler (5) erzeugten Schallwelle in elektrische Energie an dem anderen Endabschnitt des Resonanzrohrs (6) vorgesehen ist, und eine Ausgabe von dem Wandler (8) einem elektrischen Steuerungsmittel (14) zugeführt wird.

2. Auslasswärmeenergie-Wiedergewinnungssystem für einen Verbrennungsmotor nach Anspruch 1, worin ein Steuerventil (28) zum Steuem/Regeln der in den katalytischen Wandler (5) eingeführten Abgasmenge in dem Auspuffsystem (1) vorgesehen ist, und das Steuerventil (28) gemäß Ausgabebedingungen des Wandlers (8) angesteuert wird.

3. Auslasswärmeenergie-Wiedergewinnungssystem für ein Verbrennungsmotor, worin ein Stapel (11) einen Schallwellenerzeugungsabschnitt (7), der am einen Endabschnitt eines Resonanzrohrs (6) vorgesehen ist, benachbart einem Abgasreinigungskatalysator (5) angeordnet ist, der zwischenliegend in einem Auspuffsystem (1) eines Verbrennungsmotors (1) angeordnet ist, und ein Kühlabschnitt (30), der durch die Schallwelle gekühlt wird, die durch den Stapel (11) aufgrund des Erhalts der Wärme von dem katalytischen Wandler (5) erzeugt wird, an dem anderen Endabschnitt des Resonanzrohrs (6) vorgesehen ist.

4. Auslasswärmeenergie-Wiedergewinnungssystem für einen Verbrennungsmotor nach einem der Ansprüche 1 bis 3, worin der katalytische Wandler (5) so angeordnet ist, dass er einen Hochtemperaturabschnitt des Schallwellenerzeugungsabschnitts (7) umgibt.

5. Auslasswärmeenergie-Wiedergewinnungssystem für ein Verbrennungsmotor nach einem der Ansprüche 1 bis 3, worin der katalytische Wandler (5) so angeordnet ist, dass sein Abgasauslass einem Hochtemperaturabschnitt des Schallwellenerzeugungsbschnitts (7) benachbart ist und diesem gegenüberliegt.

## Revendications

1. Système de récupération d'énergie calorifique d'échappement pour moteur à combustion interne dans lequel un empilage (11) d'une partie génératrice d'ondes sonores (7) disposée à une partie d'extrémité d'un tube de résonance (6) est disposée de manière adjacente à un pot catalytique d'épuration de gaz d'échappement (5) dans une position intermédiaire dans un système d'échappement (1) d'un moteur à combustion interne (E), un transducteur (8) destiné à convertir en énergie électrique les ondes sonores générées par ledit empilage (11) en raison de la réception de chaleur en provenance dudit pot catalytique (5) est disposé à l'autre partie d'extrémité dudit tube de résonance (6), et une sortie en provenance dudit transducteur (8) est fournie à des moyens de commande électrique (14).

2. Système de récupération d'énergie calorifique d'échappement pour moteur à combustion interne selon la revendication 1, dans lequel un clapet de commande (28) destiné à commander la quantité de gaz d'échappement introduite à l'intérieur dudit pot catalytique (5) est fourni dans ledit système d'échappement (1), et ledit clapet de commande (28) est commandé en fonction de conditions de sortie dudit transducteur (8).

3. Système de récupération d'énergie calorifique d'échappement pour moteur à combustion interne dans lequel un empilage (11) d'une partie génératrice d'ondes sonores (7) disposée à une partie d'extrémité d'un tube de résonance (6) est disposé de manière adjacente à un pot catalytique d'épuration de gaz d'échappement (5) dans une position intermédiaire dans un système d'échappement (1) d'un moteur à combustion interne (E), et une partie de réfrigération (30) refroidie par les ondes sonores générées par ledit empilage (11) en raison de la réception de chaleur en provenance dudit pot catalytique (5) qui est fournie à l'autre partie d'extrémité dudit tube de résonance (6)

4. Système de récupération d'énergie calorifique d'échappement pour moteur à combustion interne selon l'une quelconque des revendications 1 à 3, dans lequel ledit pot catalytique (5) est disposé de manière à entourer une partie à haute température de la partie génératrice d'ondes sonores (7).

5. Système de récupération d'énergie calorifique d'échappement pour moteur à combustion interne selon l'une quelconque des revendications 1 à 3, dans lequel ledit pot catalytique (5) est disposé de telle sorte qu'une sortie d'échappement de celui-ci est située à proximité d'une partie à haute température, et en opposition à celle-ci, de ladite partie génératrice d'ondes sonores (7).
